# EUROPÄISCHE PATENTANMELDUNG

(11) **EP 2 431 086 A2**
(43) Veröffentlichungstag der Anmeldung: **21.03.2012**
(21) Anmeldenummer: 11181794.6
(22) Anmeldetag: 19.09.2011
(51) Int. Cl.: B01D 46/52, B01D 46/00

(54) **Innenraumluftfilter und Verfahren zum Herstellen desselben**

(30) Priorität: 17.09.2010 DE 102010045682
(71) Anmelder: Mann + Hummel GmbH, 71638 Ludwigsburg (DE)
(72) Erfinder: Ammersdörfer, Micha, 84160 Frontenhausen (DE)

(57) **Zusammenfassung**

Ein Innenraumluftfilter (1) umfasst ein Faltenpack (2) und ein Seitenband (3), welches zumindest teilweise um das Faltenpack (2) umlaufend angeordnet ist und einen an dem Faltenpack (2) verbundenen Halteabschnitt (5) und einen seitlich abstehenden Führungsabschnitt (4) hat. Eine zumindest teilweise geschlitzte Faltung (8) des Seitenbandes (3) trennt den Halteabschnitt (5) und den Führungsabschnitt (4), und ein Klebstoffmaterial (6) fixiert die Faltung (8).

## Beschreibung

### Technisches Gebiet

Die vorliegende Erfindung betrifft ein Filterelement, insbesondere einen Innenraumfilter zum Filtern von Luft für den Innenraum eines Kraftfahrzeugs. Ferner betrifft die Erfindung ein Herstellungsverfahren für ein solches Filterelement.

Ein entsprechendes Filterelement dient der Filterung von Fluidströmungen oder gasförmigen Medien, beispielsweise zur Filterung einer Luftströmung, die dem Fahrzeuginnenraum eines Kraftfahrzeugs zugeführt wird. Obwohl auf beliebige Filterelemente anwendbar, wird die vorliegende Erfindung sowie die ihr zugrunde liegende Problematik nachfolgend für ein Filterelement zur Filterung von Luft für den Innenraum eines Kraftfahrzeugs beschrieben. Solche Filter werden nachfolgend auch kurz als Kfz-Innenraumluftfilter oder auch Innenraumfilter bzw. Kabinenluftfilter bezeichnet.

Die zunehmende Luftverunreinigung, insbesondere in Großstädten, in Verbindung mit dem Einsatz moderner Klimaanlagen macht es wünschenswert und auch erforderlich, die von außen in den Innenraum eines Kraftfahrzeuges geleitete und aufbereitete bzw. klimatisierte Luft mittels geeigneter Filter zu reinigen. Hierfür kommen beispielsweise Partikelfilter, Geruchsfilter oder deren Kombination miteinander in Betracht, die in der Luft enthaltene Schwebstoffe, Partikel und Gerüche aus der Umgebungsluft möglichst gut herausfiltern bzw. absorbieren sollen. Solche Filter zur Filterung von Luft für den Innenraum eines Kraftfahrzeuges sind in einer Vielzahl von Ausführungsformen und Varianten allgemein bekannt, sodass auf deren Aufbau und Funktionsweise nachfolgend nur kurz eingegangen wird.

Da die Wirksamkeit von Filtern insbesondere von der Größe der von der Luft durchströmten Oberfläche des Filters abhängig ist, kommen für Kfz-Innenraumluftfilter überwiegend zickzackförmig gefaltete Filtermedien, die auch als plissierte Filtermedien bezeichnet werden, zum Einsatz. Durch die Faltung des verwendeten Filtermediums kann abhängig von der Faltungshöhe, dem Faltungsabstand und dem Grad des Zusammenstauchens dieser ziehharmonikaähnlichen Faltenpacks der verschiedenen Faltabschnitte des Filtermediums eine Vergrößerung der von dem Luftstrom durchströmten Filterfläche ermöglicht werden. Um entsprechende Filterelemente mit zickzackförmig gefalteten Filtermedien insbesondere montagetechnisch besser handhaben zu können, sind oft Verstärkungselemente an den Seiten des Filterelementes entlang dem Filterpack aus dem gefalteten Medium vorgesehen. Diese Armierungselemente dienen der seitlichen Fixierung und Stabilisierung des zickzackförmigen Filtermediums und sind z.B. mittels eines geeigneten Klebers an den seitlichen Kanten des Faltenpacks angebracht. Man spricht auch von Seitenbändern. Das Filterelement mit an den gefalteten Längsseiten streifenförmig angebrachten Armierungen oder Verstärkungen kann auf diese Weise montagetechnisch einfach ohne es zu beschädigen in ein Gehäuse eines Filtermoduls bzw. einer entsprechenden Filteraufnahme, beispielsweise in ein Filtergehäuse oder eine Klimaanlage eines Kraftfahrzeuges, eingefügt werden.

### Stand der Technik

Ähnliche Filterelemente sind z. B. in dem europäischen Patent EP 1 309 386 B1 beschrieben. Neben der Notwendigkeit der Stabilität der Filterelemente oder Filtereinsätze müssen diese auch an den Randbereichen zu den entsprechenden Gehäusen dicht abschließen, damit die zu filternde Luft weitestgehend durch das Filtermedium bzw. das Faltenpack strömt und nicht daran vorbeiströmt. Umlaufende Schienen oder seitlich abstehende Führungsmittel können ferner notwendig sein, um das jeweilige Filterelement auf eine das Filterelement umlaufende Auflagefläche zu legen oder in eine passende Aufnahme- oder Gehäuseöffnung zu schieben. In dem vorgenannten europäischen Patent ist beispielsweise ein aus Kunststoff gespritzter flexibler Rahmen um das Faltenpack offenbart, um den Filter in eine passende Aufnahmeöffnung, beispielsweise des Fahrzeugs, hineinzuschieben.

Es ist ferner gewünscht, dass diese Filterelemente neben der einfachen montagetechnischen Handhabbarkeit möglichst auch kostengünstig sein sollten und damit insbesondere möglichst einfach zu produzieren sind. Dabei ist es auch wünschenswert, möglichst wenig Filtermaterial, wie z. B. Filtervlies, einzusetzen und die Herstellung in wenigen Schritten zu vollziehen.

### Offenbarung der Erfindung

Vor diesem Hintergrund liegt der vorliegenden Erfindung die Aufgabe zugrunde, ein verbessertes Filterelement zu schaffen, dass möglichst einfach herstellbar ist und dichtend mit einem Gehäuse abschließt.

Diese Aufgabe wird durch ein Filterelement mit den Merkmalen des Anspruchs 1 gelöst sowie durch ein Verfahren gemäß Anspruch 9.

Demgemäß wird ein Filterelement vorgeschlagen, welches ein Faltenpack und ein Seitenband aufweist, wobei das Seitenband zumindest teilweise um das Faltenpack umlaufend angeordnet ist. Das Seitenband hat einen an dem Faltenpack verbundenen Halteabschnitt und einen seitlich abstehenden Führungsabschnitt. Eine zumindest teilweise geschlitzte Faltung des Seitenbandes trennt den Halteabschnitt und den Führungsabschnitt, und ein Klebstoffmaterial fixiert die Faltung. Alternativ oder kombiniert kann die zumindest teilweise geschlitzte Faltung auch durch ein Anschmelzen oder Aufschmelzen der Fasern des Seitenbandes im Bereich der Faltung fixiert werden.

Das Filterelement ist insbesondere als Innenraumluftfilter beispielsweise für ein Kraftfahrzeug ausgestaltet.

Durch die geschlitzte Ausgestaltung des Seitenbandes, wodurch einerseits ein seitlich abstehender Führungsabschnitt entsteht und andererseits ein Halteabschnitt, der beispielsweise auf die Faltenprofile des Faltenpacks befestigt ist, wird ein besonders einfach herstellbares Filterelement erzeugt.

Bei dem vorgeschlagenen Filterelement wird beispielsweise durch die Faltung entlang eines Schlitzes eine Rückstellkraft entgegen der Faltungsrichtung erzielt. Dieser Rückstellkraft wirkt vorzugsweise das Klebstoffmaterial entgegen, welches beispielsweise in der Faltungsinnenkante vorgesehen sein kann. Der Führungsabschnitt bildet somit eine stabile Führungsschiene, die z.B. mit einem Hotmelt-Klebstoff fixiert ist. Insbesondere kann ein starres Seitenband realisiert werden, welches einfach beim Herstellungsprozess geschlitzt werden kann. Alternativ oder kombiniert kann der Rückstellkraft durch eine durch Anschmelzen oder Aufschmelzen verfestigte Kante entgegengewirkt werden. Es versteht sich, dass sich eine durch Anschmelzen oder Aufschmelzen verfestigte Kante auf den Zustand nach dem Abkühlen bezieht.

Bei dem vorgeschlagenen Innenraumluftfilter oder Filterelement ist das Seitenband auf der dem Faltenpack abgewandten Seite zumindest teilweise entlang der Faltung geschlitzt oder eingeschnitten. Dabei kann das Seitenband insbesondere hinsichtlich seiner Dicke nur teilweise angeschlitzt sein. Es ist ferner denkbar, dass nicht entlang der vollständigen Faltung der Schlitz vorgesehen ist, sondern gestrichelt oder unterbrochen ein Einschnitt in das Seitenbandmaterial vorgenommen ist.

In einer bevorzugten Ausführungsform des Filterelements ist das Seitenband ausschließlich auf der dem Faltenpack abgewandten Seite geschlitzt.

Das Klebstoffmaterial ist vorzugsweise in der Art einer Klebstoffraupe oder eines Klebstofffadens angeordnet. Man kann auch von einer Leimraupe oder einem Leimfaden sprechen, der beim Herstellen einfach in die Innenkante des abgebogenen, abgeknickten oder abgefalteten Führungsabschnitts von dem Halteabschnitt eingespritzt werden kann. Denkbar sind verschiedene Auftragsmechanismen, beispielsweise mittels eines Extruders. Somit ist vorzugsweise das Klebstoffmaterial in oder an einer Faltungsinnenkante der geschlitzten Faltung angeordnet.

Bei einer alternativen Ausführungsform eines Filterelements ist das Klebstoffmaterial derart angeordnet, dass es die geschlitzte Faltung über ihre vollständige Länge bedeckt. Dies führt zu einer besonders guten Kräftebilanz zwischen der Rückstellkraft durch die Faltung und der Klebewirkung durch das Klebstoffmaterial. Um Klebstoff einzusparen, kann selbstverständlich der entstehende Klebstofffaden oder die Klebstoffraupe auch nur punktiert, abschnittsweise, stückweise oder lokal entlang der Faltung aufgetragen werden, um dieselbe Rückstellkraft gegenüber der Faltung zu erzielen.

Bei bestimmten Ausführungsformen, beispielsweise als Innenraumluftfilter, hat das Seitenband ein Seitenbandmaterial, welches starrer oder fester ist als das das Faltenpack bildende Filtermaterial. Als Materialien kommen insbesondere Kunststoffmaterialien in Frage, die einfach handhabbar und herstellbar sind. Denkbar sind jedoch auch Papier-, Papp- oder Zellulosematerialien. Das Filtermaterial ist üblicherweise ein Filtervlies und kann insbesondere auch mehrlagig mit zwischenliegenden Adsorberpartikeln ausgestaltet sein. Das Filtermaterial oder Filtermedium ist in einigen Ausführungsformen weich und flexibel ausgestaltet, während die Seitenbänder fest und starr sind. Dabei kann die Festigkeit an die Gegebenheiten des Einbauortes oder die Filtertypen angepasst sein.

Das Seitenband hat z.B. eine Seitenbanddicke, und das Seitenband ist entlang der Faltung in etwa zwischen einem Drittel und zwei Dritteln der Seitenbanddicke eingeschlitzt. Das Einschlitzen kann dabei durch Schneiden, wie mit rotierenden Messern oder auch durch einen Materialabtrag, beispielsweise durch Fräsen erfolgen. Man kann auch von einem teilweisen Sägen des Seitenbandmaterials, nicht jedoch durch seine vollständige Dicke, sprechen.

Ferner wird ein Verfahren zum Herstellen eines Filterelements, insbesondere eines Innenraumluftfilters vorgeschlagen, welcher ein Faltenpack und ein Seitenband aufweist, wobei das Seitenband zumindest teilweise um das Faltenpack umlaufend angeordnet ist. Das Verfahren umfasst die Schritte: Einschlitzen des Seitenbandes zum Ausbilden eines Schlitzes; Falten des Seitenbandes entlang des Schlitzes zum Ausbilden eines Halteabschnitts und eines Führungsabschnitts; Aufbringen eines Klebstoffmaterials zum Fixieren der Faltung des gefalteten Seitenbandes; und Anbringen des Halteabschnitts an ein Faltenpack. Alternativ oder kombiniert zum Aufbringen eines Klebstoffmaterials kann das Ausbilden eines Schlitzes mittels eines erhitzten Ritzers, z.B. ein Keil oder Messer, erfolgen, der neben dem Schlitzen die Fasern so erwärmt, dass diese anschmelzen oder aufschmelzen. Das eingeschlitzte Seitenband wird dann im angeschmolzenen oder aufgeschmolzenen Zustand umgelegt, so dass die gewünschte Form entsteht und solange in dieser Form gehalten, bis die Fasern erkaltet sind und die Form des Seitenbandes beibehalten wird.

Dabei können die Verfahrensschritte in verschiedenen Reihenfolgen durchgeführt werden. Einerseits ist es möglich, ein Seitenband mit Schlitz und ausgebildeten Halte- und Führungsabschnitten an ein bereitgestelltes Faltenpack anzubringen, andererseits ist es auch möglich, das bereits teilweise an das Faltenpack befestigte Seitenband anschließend zu schlitzen oder zu schneiden, umzubiegen und mit dem Klebstoffmaterial zu versehen.

Das vorgeschlagene Herstellungsverfahren lässt sich einfach in bestehende Herstellungsprozesse integrieren. Es ist insbesondere besonders einfach, bei einer Fließbandfertigung, die vorgeschlagenen Schlitze in die Seitenbänder von außen, also in Richtung auf das Faltenpack vorzunehmen und anschlie-βend beispielsweise Hotmelt-Kleber derart aufzutragen, dass nach dem Umbiegen der Führungsabschnitte und Verfestigen des Klebers eine stabile Führungsschiene für die jeweiligen Filterelemente entsteht.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
- Fig. 1: eine schematische perspektivische Darstellung einer ersten Ausführungsform eines Filterelements;
- Fig. 2: schematische Darstellungen zur Erläuterung eines Verfahrens zur Herstellung eines Filterelements;
- Fig. 3: eine Ausschnittdarstellung einer Ausführungsform eines Filterelements;
- Fig. 4: eine weitere Ausschnittdarstellung einer Ausführungsform eines Filterelements und
- Fig. 5: eine Ausschnittdarstellung eines Seitenbandabschnitts während der Herstellung eines Filterelements.

In den Figuren bezeichnen dieselben Bezugszeichen gleiche oder funktionsgleiche Elemente, soweit nichts Gegenteiliges angegeben ist.

### Ausführungsform(en) der Erfindung

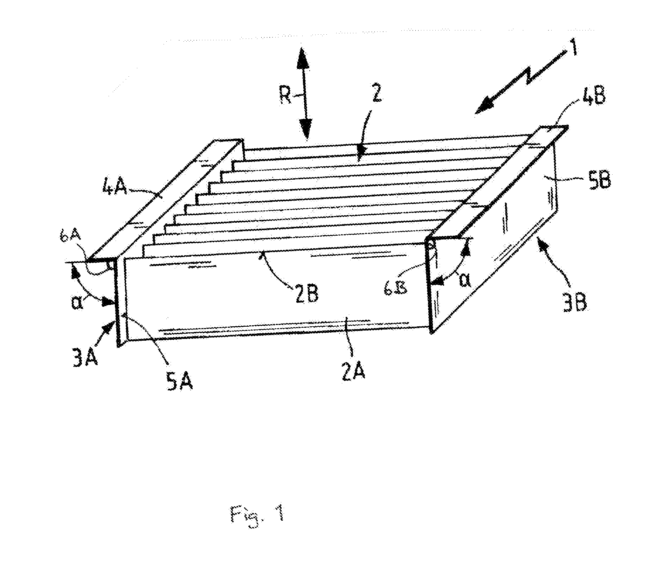

In Fig. 1 ist eine perspektivische Darstellung eines ersten Ausführungsbeispiels für ein Filterelement dargestellt. Dabei kann es sich insbesondere um einen Innenraumluftfilter für ein Kraftfahrzeug handeln. Dazu ist zunächst ein Faltenpack 2 vorgesehen, das aus ziehharmonikaförmig gefalteten Faltenabschnitten 2A gebildet ist, welche durch die jeweiligen Faltkanten 2B begrenzt sind. Der Pfeil R deutet eine mögliche Durchströmrichtung durch das Faltenpack an. In der Fig. 1 ist lediglich der vordere sichtbare Faltenabschnitt 2A und eine Faltkante 2B mit Bezugszeichen versehen worden. Seitlich wird das Faltenpack 2 durch zwei Seitenbandteile 3A, 3B fixiert. Es kann beispielsweise eine Verklebung zwischen dem Seitenband 3A, 3B und dem Faltenpack 2 erfolgen. Das Seitenbandmaterial ist thermisch verformbar, beispielsweise aus einem Vliesmaterial. Ein mögliches Vliesmaterial besteht aus PET-Fasern oder anderen geeigneten Kunststoffen. Grundsätzlich ist auch möglich, das Seitenband aus dem Filtermedium bzw. Filtermaterial herzustellen.

Das Seitenband weist ferner seitlich von dem gesamten Filterelement 1 abstehende Führungsabschnitte 4A, 4B auf. Die beiden Seitenbandteile 3A, 3B haben somit einen unteren Halteabschnitt 5A, 5B, mit dem die Falten des Faltenpacks 2 fixiert werden, und den Führungsabschnitt 4A, 4B, der vorzugsweise einem rechten Winkel α an dem Halteabschnitt 5A absteht. Die Faltung, welche den jeweils abstehenden Führungsabschnitt 4A, 4B und den Halteabschnitt 5A, 5B verbindet ist mit Hilfe eines Klebstoffs 6A, 6B fixiert, so dass insgesamt eine stabile Form des Filterelements entsteht. Der Klebstoff ist z.B. eine entlang der Faltkante aufgetragene Klebstoffraupe aus Hotmeltkleber. Die entsprechende Klebstoffraupe kann über die gesamte Länge der Faltung aufgetragen sein, oder aber nur punktuell die Form und Faltung des Führungsabschnitts stützen oder halten. Unterstützend kann das Material des Seitenbandes 3A, 4A, 3B, 4B entlang der Faltung auf der Außenseite des Filterelements 1 eingeschnitten sein. D. h., der entsprechende Schnitt wird von dem Klebstoff 6A, 6B zumindest teilweise abgedeckt.

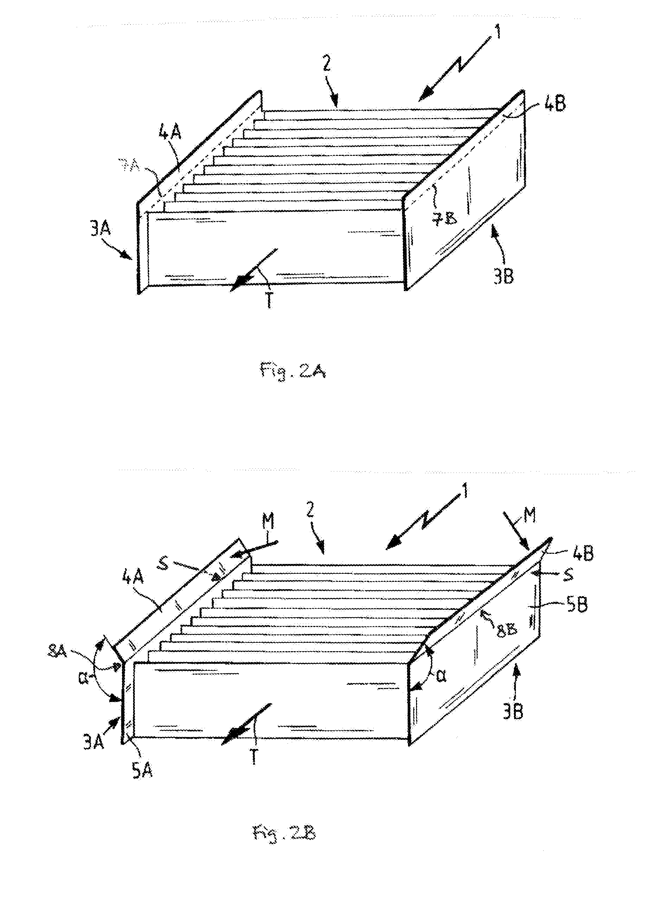

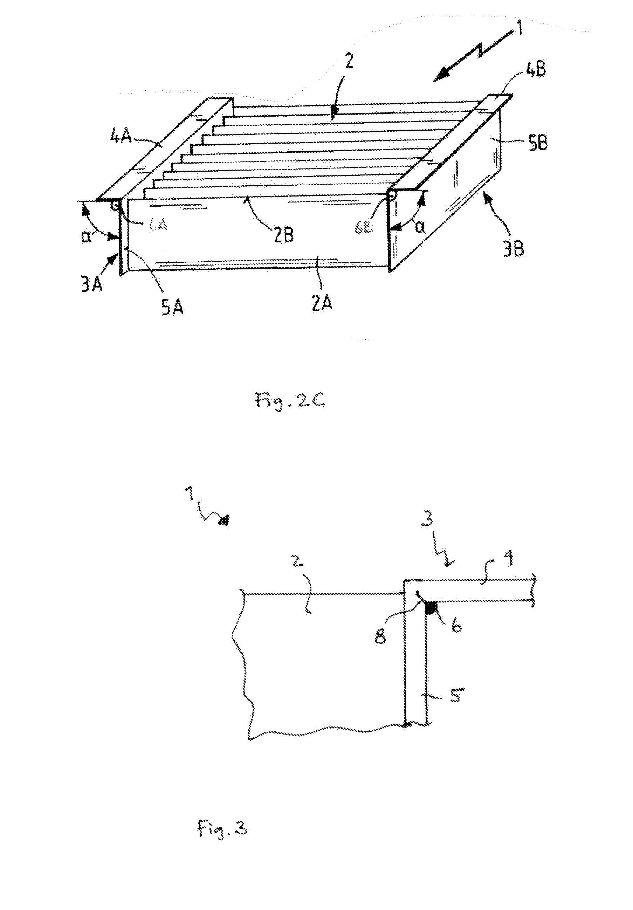

In Fig. 2 sind Zustände eines Ausführungsbeispiels eines Filterelementes während des Herstellungsverfahrens perspektivisch dargestellt. Bei der Herstellung des Filterelementes 1 wird z.B. zunächst das Faltenpack 2 mit den nicht verformten Seitenbandteilen 3A, 3B verklebt und z.B. auf ein Transportband gesetzt, sodass die entsprechend vorgefertigten Filterelemente 1 in einer Transportrichtung T befördert werden. Während des Transports können die als Führungsabschnitte 4A, 4B und Halteabschnitte 5A, 5B vorgesehenen Abschnitte der Seitenbänder durch ein teilweises Einschneiden oder Einritzen für das Umbiegen oder Falten entlang der Linie 8A, 8B vorbereitet werden. Dies ist in der Fig. 2A durch die Pfeile S angedeutet. Es ist auch möglich, die bereits längs geschlitzten oder angeschnittenen Seitenbandteile vorgefertigt bereitzustellen und dann an die Faltenprofile zu befestigen.

Nachdem das entsprechende vorgefertigte Filterelement 1 weiter transportiert wurde, kann durch mechanische Einwirkung M, wie es in der Fig. 2B durch die Pfeile M angedeutet ist, der jeweilige Führungsabschnitt 4A, 4B umgebogen werden. Dies erfolgt, soweit bis ein gewünschter Winkel α, beispielsweise 90°, wie es in der Fig. 1 dargestellt ist, erreicht ist. Anschließend können die entsprechenden Bereiche entlang des Schnitts bzw. der Faltung 8A, 8B der Seitenbänder 3A, 3B, also insbesondere die Führungsabschnitte mit einem Klebstoff behandelt werden, sodass eine Fixierung seitlich abstehend von dem Filterelement 1 erreicht wird.

Fig. 2C zeigt eine Ausrichtung der Führungsabschnitte 4A, 4B, mit einem Winkel α von etwa 90°, wobei die Faltung durch die aufgetragenen Klebstoffraupen 6A und 6B, welche in der Fig. 2C vorderseitig im Profil angedeutet sind, und die sich entlang der Längsfaltung (8A, 8B in Fig. 2B) erstrecken, fixiert ist. Dabei sind verschiedene Klebstoffarten denkbar. Insbesondere eignet sich ein Hotmeltklebstoff, mit dem z.B. bereits die Faltenprofile des Faltenpacks 2 auf die Halteabschnitte 3A, 3B angebracht sind. Durch das Anschlitzen des Seitenbandmaterials und anschließendes Umbiegen, entsteht einerseits eine Rückstellkraft, entgegen der in Fig. 2B angedeuteten mechanischen Einwirkung M. Andererseits erzeugt die Klebewirkung des aufgetragenen Klebstoffs 6A, 6B in der Faltungsinnenkante eine entgegengesetzte Kraft. Insgesamt ergibt sich somit eine besonders stabile Kante und damit ein stabiler Führungsabschnitt 4A, 4B.

In Fig. 3 ist eine Ausschnittdarstellung einer Ausführungsform des Filterelementes im Querschnitt gezeigt. Dabei hat das Filterelement 1, beispielsweise ein Innenraumluftfilter für ein Kraftfahrzeug, ein Faltenpack 2, das schematisch angedeutet ist, und ein Seitenband 3. Das Seitenband 3 umfasst einen ersten Schenkel 5 und einen zweiten Schenkel 4. Der erste Schenkel entspricht dabei einem Halteabschnitt 5 und ist auf Faltungsprofile des Faltenpacks 2 geklebt. Damit werden die Faltprofile des Faltenpacks 2 fixiert. Seitlich abstehend, in Richtung von dem Faltenpack 2 weg, ist der Führungsabschnitt 4 des Seitenbandes 3. Man erkennt im Profil den Einschnitt 8, welcher nur teilweise die Dicke des Seitenbandmaterials durchdringt. Ferner erkennt man den, beispielsweise im Querschnitt rund, in der Innenkante der Faltung vorgesehenen Klebeabschnitt 6.

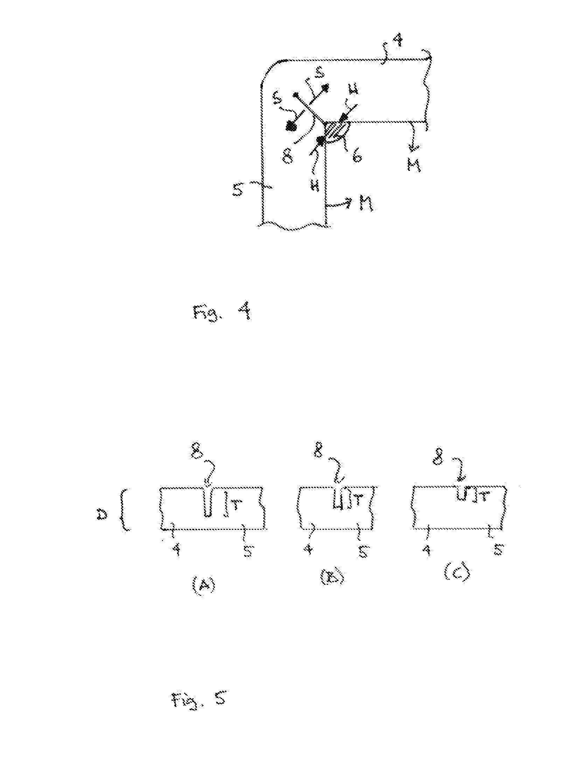

Um die entstehenden Kräfteverhältnisse ferner zu verdeutlichen ist in Fig. 4 eine weitere Ausschnittdarstellung, insbesondere der Faltung des Seitenbandes, dargestellt. Durch das Umbiegen bzw. das Falten in Richtung der Pfeile M, die in etwa der Krafteinwirkung, wie sie in der Fig. 2B dargestellt ist, entsprechen, wird im Bereich des Einschnittes 8 das Material des Seitenbandes komprimiert bzw. zusammengedrückt. Es entsteht somit durch das Verbiegen oder Falten einer Rückstellkraft, die in der Fig. 4 mit S bezeichnet ist und von dem Einschnitt 8 wegzeigt. Ohne eine weitere Fixierung des Seitenbandmaterials bzw. der beiden Schenkel 4, 5, würde sich die Faltung entgegen der Richtung der Pfeile M öffnen. Durch das in der inneren Ecke der Faltung vorliegenden Klebstoffmaterials 6, welches in der Regel verfestigt ist und prinzipiell auch in den sich durch den Schlitz 8 ergebenden Spalt eindringen kann, wirkt eine Haltekraft, die mit den Pfeilen H bezeichnet ist. Die Haltekräfte H wirken den Rückstellkräften S entgegen, so dass insgesamt ein stabiler, in der Darstellung der Fig. 4 rechter Winkel, entsteht.

Fig. 5 zeigt schließlich Ausschnittdarstellungen eines Seitenbandabschnittes während der Herstellung und insbesondere beim Einschneiden oder Einritzen des Schlitzes in das Seitenbandmaterial. In der Fig. 5 wird in den Fig. 5A-5C ein Seitenbandmaterial der Dicke D dargestellt. Dabei sind verschiedene Einschnitte oder tiefe Schlitze denkbar. In der Fig. 5A ist beispielsweise ein Schlitz der Tiefe T, die in etwa zwei Dritteln der Dicke des Seitenbandmaterials entspricht, angedeutet. Durch den Schlitz 8, entlang dessen die Faltung verläuft, wird der Führungsabschnitt 4 und der Halteabschnitt 5 des Seitenbandes festgelegt. In Fig. 5B ist die Tiefe von T = ½D angedeutet. Denkbar ist auch eine geringere Tiefe von etwa einem Drittel D, wie es in Fig. 5C dargestellt ist, denkbar.

Das Schlitzen des Seitenbandmateriales kann über verschiedene Mechanismen erfolgen. Beispielhaft kann ein rotierendes Messer in das Seitenbandmaterial von außen (in der Orientierung der Fig. 1 oder 2) eingreifen und einen entsprechenden Schlitz oder Schnitt vollziehen. Denkbar ist auch Materialabtrag, bei dem beispielsweise über eine Fräse ein entsprechender Schlitz in das Seitenbandmaterial gefräst wird. Es ist auch denkbar, dass mittels einer Art Kreissäge entsprechende Schlitze erzeugt werden. Dabei müssen die Schlitze nicht entlang der vollständigen Faltungslänge erfolgen, sondern es genügt prinzipiell, um die gewünschten Kräfte, wie sie in Fig. 4 schematisch dargestellt sind, zu erzielen, abschnittweise Einschnitte und Klebungen vorzunehmen. Insbesondere der Einsatz von nur punktuellen Klebungen spart Klebstoffmaterial und verringert das Gewicht des Filterelements.

Obwohl die vorliegende Erfindung anhand bevorzugter Ausführungsbeispiele näher erläutert wurde ist sie nicht darauf beschränkt, sondern vielfältig modifizierbar. Es können andere als die dargestellten Geometrien für Filterelemente gewählt werden. Dabei können die Gegebenheiten am Einbauort des Filters berücksichtigt werden. Es sind ferner weitere Ausführungsformen mit z.B. vollständig umlaufenden Seitenbändern und Führungsabschnitten möglich. Die genannten Materialen für das Seitenmaterial und das Filtermedium sind ebenfalls nur beispielhaft zu verstehen. Selbstverständlich können in allen Beispielen Fixierungen durch Klebungen durch solche mit angeschmolzenen oder aufgeschmolzenen Fasern im Bereich der Faltung des Seitenbandes ersetzt werden.

## Patentansprüche

1. Innenraumluftfilter (1) mit einem Faltenpack (2) und einem Seitenband (3), welches zumindest teilweise um das Faltenpack (2) umlaufend angeordnet ist und einen an dem Faltenpack (2) verbundenen Halteabschnitt (5) und einen seitlich abstehenden Führungsabschnitt (4) umfasst, wobei eine zumindest teilweise geschlitzte Faltung (8) des Seitenbandes (3) den Halteabschnitt (5) und den Führungsabschnitt (4) trennt und ein Klebstoffmaterial (6) die Faltung (8) fixiert und/ oder angeschmolzene oder aufgeschmolzene Fasern des Seitenbandes (3) die Faltung (8) fixieren.

2. Innenraumluftfilter (1) nach Anspruch 1, wobei das Seitenband (3) auf der dem Faltenpack (2) abgewandten Seite zumindest teilweise entlang der Faltung (8) geschlitzt oder eingeschnitten ist.

3. Innenraumluftfilter (1) nach Anspruch 1 oder 2, wobei das Klebstoffmaterial (6) in der Art einer Klebstoffraupe oder eines Klebstofffadens angeordnet ist.

4. Innenraumluftfilter (1) nach einem der Ansprüche 1 - 3, wobei das Klebstoffmaterial (6) in oder an einer Faltungsinnenkante der geschlitzten Faltung (8) angeordnet ist.

5. Innenraumluftfilter (1) nach einem der Ansprüche 1 - 4, wobei das Klebstoffmaterial (6) ein Hotmeltklebstoff ist.

6. Innenraumluftfilter (1) nach einem der Ansprüche 1 - 5, wobei das Klebstoffmaterial (6) die geschlitzte Faltung (8) über Ihre vollständige Länge bedeckt.

7. Innenraumluftfilter (1) nach einem der Ansprüche 1 - 6, wobei das Seitenband (3) ein Seitenbandmaterial aufweist, welches starrer oder fester ist als ein das Faltenpack (2) bildendes Filtermaterial.

8. Innenraumluftfilter (1) nach einem der Ansprüche 1 - 7, wobei das Seitenband (3) eine Seitenbanddicke aufweist und das Seitenband (3) entlang der Faltung zwischen einem Drittel und zwei Dritteln der Seitenbanddicke (D) eingeschlitzt ist.

9. Verfahren zum Herstellen eines Innenraumluftfilter (1), welcher ein Faltenpack (2) und ein Seitenband (3) umfasst, wobei das Seitenband (3) zumindest teilweise um das Faltenpack (2) umlaufend angeordnet ist, umfassend:
- Einschlitzen des Seitenbandes (3) zum Ausbilden eines Schlitzes (8);
- Falten des Seitenbandes (3) entlang des Schlitzes (8) zum Ausbilden eines Halteabschnitts (5) und eines Führungsabschnitts (4);
- Aufbringen eines Klebstoffmaterials (6) zum Fixieren der Faltung des gefalteten Seitenbandes (3); und
- Anbringen des Halteabschnitts (5) an ein Faltenpack (2).

10. Verfahren nach Anspruch 9 , wobei das Einschlitzen mit Hilfe eines Messers oder durch einen Materialabtrag, insbesondere mit Hilfe eines Fräsvorgangs, erfolgt.

11. Verfahren zum Herstellen eines Innenraumluftfilters (1), welcher ein Faltenpack (2) und ein Seitenband (3) umfasst, wobei das Seitenband (3) zumindest teilweise um das Faltenpack (2) umlaufend angeordnet ist, umfassend:
- Einschlitzen des Seitenbandes (3) zum Ausbilden eines Schlitzes (8);
- Falten des Seitenbandes (3) entlang des Schlitzes (8) zum Ausbilden eines Halteabschnitts (5) und eines Führungsabschnitts (4);
- Anschmelzen oder Aufschmelzen der Fasern des Seitenbandes (3) zumindest im Bereich des Schlitzes (8).

12. Verfahren nach Anspruch 11, wobei das Seitenband (3) mittels eines erhitzten Ritzers eingeschlitzt wird und der erhitzte Ritzer die Fasern des Seitenbandes (3) im Bereich des Schlitzes (8) anschmilzt oder aufschmilzt.

13. Verfahren nach einem der Ansprüche 11 und 12, wobei das Seitenband während des Einschlitzens am Halteabschnitt (5) bereits mit dem Faltenpack (2) verbunden ist.
